(19) Europäisches Patentamt / European Patent Office / Office européen des brevets

(11) **EP 3 100 113 B1**

(12) **FASCICULE DE BREVET EUROPEEN**

(45) Date de publication et mention de la délivrance du brevet:
**16.05.2018 Bulletin 2018/20**

(21) Numéro de dépôt: **15702731.9**

(22) Date de dépôt: **30.01.2015**

(51) Int Cl.:
**G02F 1/39** (2006.01)

(86) Numéro de dépôt international:
**PCT/EP2015/051896**

(87) Numéro de publication internationale:
**WO 2015/114075 (06.08.2015 Gazette 2015/31)**

(54) **AMPLIFICATEUR PARAMETRIQUE OPTIQUE D'IMPULSIONS ULTRA-COURTES**

OPTISCHER PARAMETRISCHER ULTRAKURZER IMPULSVERSTÄRKER

OPTICAL PARAMETRIC ULTRASHORT PULSE AMPLIFIER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2014 FR 1450793**

(43) Date de publication de la demande:
**07.12.2016 Bulletin 2016/49**

(73) Titulaires:
- **Commissariat à l'Énergie Atomique et aux Énergies Alternatives**
  **75015 Paris (FR)**
- **Centre National de la Recherche Scientifique**
  **75016 Paris (FR)**
- **Université Lille 1 - Sciences Et Technologies**
  **59655 Villeneuve D'ascq Cedex (FR)**

(72) Inventeurs:
- **HUGONNOT, Emmanuel**
  **33400 Talence (FR)**
- **BEAURE D'AUGERES, Patrick**
  **33600 Pessac (FR)**
- **BIGOURD, Damien**
  **59430 Saint-Pol sur Mer (FR)**
- **MUSSOT, Arnaud**
  **59260 Hellemmes (FR)**
- **KUDLINSKI, Alexandre**
  **59496 Salome (FR)**

(74) Mandataire: **Brevalex**
**56, Boulevard de l'Embouchure**
**B.P. 27519**
**31075 Toulouse Cedex 2 (FR)**

(56) Documents cités:
**WO-A1-2009/108844      WO-A2-2011/106752**

- **WANG HE-LIN ET AL: "ELECTROMAGNETISM, OPTICS, ACOUSTICS, HEAT TRANSFER, CLASSICAL MECHANICS, AND FLUID DYNAMICS;Optical parametric chirped pulse amplification based on photonic crystal fibre", CHINESE PHYSICS B, CHINESE PHYSICS B, BRISTOL GB, vol. 20, no. 8, 5 août 2011 (2011-08-05), page 84208, XP020209190, ISSN: 1674-1056, DOI: 10.1088/1674-1056/20/8/084208**
- **DAMIEN BIGOURD ET AL: "High gain fiber optical parametric chirped pulse amplification of femtosecond pulses at 1 Î 1/4 m", LASERS AND ELECTRO-OPTICS (CLEO), LASER SCIENCE TO PHOTONIC APPLICATIONS)-CLEO: 2011 - LASER SCIENCE TO PHOTONIC APPLICATIONS- 1-6 MAY 2011, BALTIMORE, MD, USA, IEEE, US, 1 mai 2011 (2011-05-01), pages 1-2, XP031891728, ISBN: 978-1-4577-1223-4**
- **BEAURE D'AUGERES PATRICK ET AL: "Amplification of ultrashort optical pulses in a two-pump fiber optical parametric chirped pulse amplifier", CLEO: 2013, THE OPTICAL SOCIETY, 9 juin 2013 (2013-06-09), pages 1-2, XP032602484,**
- **KYUNG-HAN HONG ET AL: "High-energy, phase-stable, ultrabroadband kHz OPCPA at 21 [mu]m pumped by a picosecond cryogenic Yb:YAG laser", OPTICS EXPRESS, vol. 19, no. 16, 28 juillet 2011 (2011-07-28), page 15538, XP055014474, ISSN: 1094-4087, DOI: 10.1364/OE.19.015538**

**Description**

## DOMAINE TECHNIQUE

La présente invention concerne le domaine des amplificateurs paramétrique optiques d'impulsions à dérive de fréquence, en particulier les amplificateurs fibrés.

## ÉTAT DE LA TECHNIQUE ANTÉRIEURE

On connaît dans l'art antérieur les amplificateurs paramétriques optiques fibrés à dérive de fréquence, ou FOPCPA pour l'anglais « *fiber optical parametric chirped pulse amplifier*", comme par example décrit dans "High gain fiber optical parametric chirped pulse amplification of femtosecond pulses at 1 micron" by D. Bigourd et al (CLEO 2011). Ces amplificateurs, grâce à leur architecture fibrée, présentent un encombrement réduit, une grande robustesse, et permettent d'envisager des développements industriels à coûts réduits.

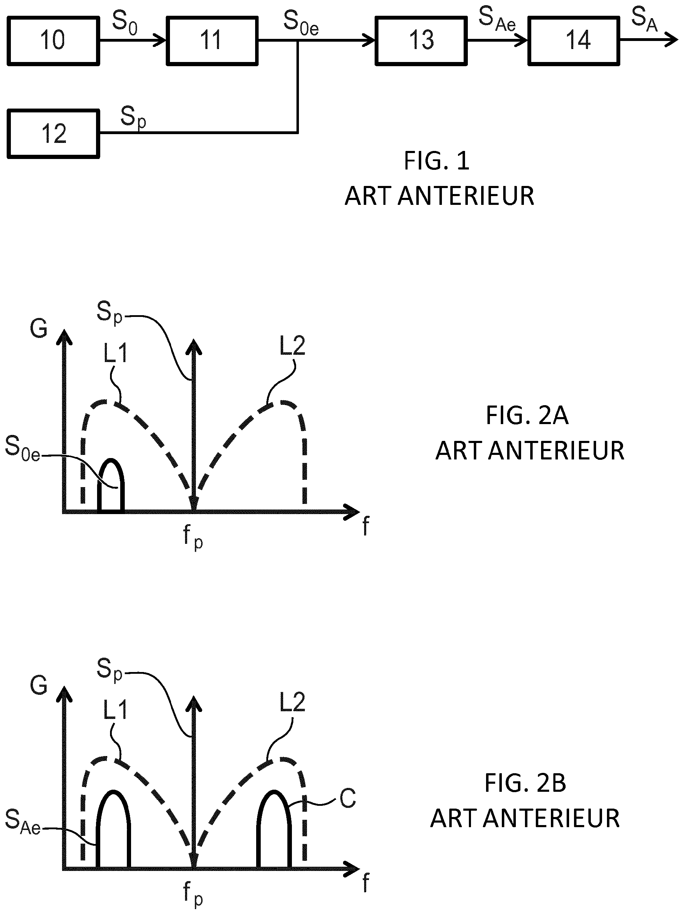

On a illustré en figure 1 un système d'amplification paramétrique optique fibré d'impulsions à dérive de fréquence.

Une source 10 émet des impulsions courtes, typiquement d'une durée de plusieurs centaines de femto-secondes. Ces impulsions sont nommées « onde signal d'entrée », référencée $S_0$.

Chaque impulsion de l'onde signal d'entrée est étirée temporellement à l'aide d'un étireur 11, pour fournir une impulsion d'une onde signal étirée $S_{0e}$. Il s'agit d'un étirement temporel, qui consiste à étaler temporellement les différentes contributions spectrales d'une impulsion. On utilise également le terme anglais « chirp », ou l'expression « dérive en fréquence », pour désigner un étirement temporel.

On peut parler d'un façonnage en phase pour désigner le traitement réalisé par un étireur. Dans tout le texte, le terme de phase désigne une phase spectrale.

Un étireur peut également réaliser un façonnage en amplitude, par exemple en introduisant des pertes qui diffèrent selon la longueur d'onde de l'onde.

Un étireur permet par exemple de passer d'une onde présentant une phase spectrale constante ou linéaire (dérive en fréquence nulle), à une onde présentant une phase spectrale quadratique (dérive en fréquence purement linéaire).

On nomme « impulsion à dérive en fréquence » une impulsion de l'onde signal étirée. Par exemple, une impulsion de durée initiale 200 fs est étirée à 10 ns.

L'étireur 11 peut se présenter sous la forme d'un dispositif fibré (comprenant par exemple un réseau de Bragg fibré), ou d'un dispositif en espace libre (comprenant par exemple un réseau de diffraction ou un matériau dispersif). Un étireur est un dispositif bien connu de l'homme du métier.

Une source 12 fournit une onde de pompe $S_p$ constituée, par exemple, d'impulsions temporelles carrées de largeur 10 ns.

L'onde de pompe $S_p$ et l'onde signal étirée $S_{0e}$ sont injectées dans une fibre optique non linéaire 13, présentant une non-linéarité d'ordre 3. La fibre optique non linéaire 13 réalise un mélange à quatre ondes à partir de deux photons de l'onde de pompe et d'un photon de l'onde signal étirée. On obtient ainsi, en sortie de la fibre 13 une onde signal de sortie $S_{Ae}$, correspondant à l'onde signal d'entrée, étirée amplifiée. En d'autres termes, le mélange à quatre ondes réalise un transfert d'énergie de l'onde de pompe $S_p$ vers l'onde signal étirée $S_{0e}$ et vers une onde dite complémentaire (en anglais, « idler wave »). La fibre 13 est par exemple une fibre optique micro-structurée de plus de cent mètres de long, dont la dispersion respecte la condition d'accord de phase entre l'onde de pompe et l'onde signal d'entrée.

L'onde signal de sortie $S_{Ae}$ est ensuite amenée à un compresseur 14, qui réduit sa largeur temporelle pour se rapprocher au mieux de la largeur temporelle de l'onde signal d'entrée $S_0$. On obtient en sortie du compresseur une onde signal amplifiée $S_A$ correspondant à l'onde signal d'entrée, mais d'intensité bien supérieure.

Les figures 2A et 2B illustrent de façon schématique le principe de l'amplification d'impulsions à dérive de fréquence.

Sur ces figures, on a porté la fréquence optique f en abscisse, et le gain G en ordonnée (en échelle logarithmique). L'onde de pompe $S_p$ est une onde monochromatique de fréquence $f_p$. Lorsqu'elle est injectée dans la fibre optique non linéaire 13, elle génère deux lobes de gain de part et d'autre de la fréquence $f_p$. Un premier lobe de gain L1 correspond à une bande de gain du côté des basses fréquences. Un deuxième lobe de gain L2 correspond à une bande de gain du côté des hautes fréquences. L'onde signal étirée $S_{0e}$ se situe dans l'un ou l'autre des lobes L1, L2 (voir figure 2A). En sortie de la fibre optique non linéaire 13, on obtient l'onde signal de sortie $S_{Ae}$, et une onde C appelée onde complémentaire, symétrique en fréquence de $S_{Ae}$ relativement à l'onde de pompe $S_p$ (voir figure 2B).

Cet amplificateur paramétrique optique fibré à dérive de fréquence permet d'amplifier une onde signal d'entrée $S_0$ présentant une grande largeur spectrale, grâce aux lobes de gain présentant également une grande largeur spectrale. Par exemple, on peut amplifier une onde signal d'entrée avec un gain de 30 dB, sur plus de 8 nm de son spectre. Les impulsions de l'onde signal amplifiée, en sortie du compresseur, présentent alors une durée de 660 fs.

Un inconvénient de ce système d'amplification est qu'il ne permet pas d'obtenir des impulsions d'une onde signal amplifiée, présentant une largeur temporelle inférieure à plusieurs centaines de femto-secondes.

Un objectif de la présente invention est de proposer un amplificateur permettant d'obtenir des impulsions d'une onde signal amplifiée, présentant une largeur temporelle inférieure à 500 fs, et même inférieures à 100 fs (où 1 fs = $10^{-15}$ s).

## EXPOSÉ DE L'INVENTION

Cet objectif est atteint avec un dispositif d'amplification paramétrique optique d'impulsions à dérive en fréquence, comprenant un guide d'onde agencé pour recevoir en entrée les impulsions à dérive en fréquence dites onde signal étirée, et pour fournir une onde signal de sortie résultant d'un mélange à quatre ondes.

Le dispositif selon l'invention comprend :

- des moyens d'émission, pour émettre des impulsions lumineuses non monochromatiques dites onde de pompe ; et
- des moyens de mise en forme d'une onde comprenant un premier étireur, agencés pour recevoir en entrée l'onde de pompe, et pour fournir en sortie une onde de pompe étiré ;

le guide d'onde étant agencé pour recevoir en outre en entrée l'onde de pompe étirée.

De préférence, les moyens d'émission sont agencés pour émettre une onde de pompe présentant une largeur spectrale supérieure ou égale au nanomètre.

Le rapport entre une dérive en fréquence de l'onde signal étirée, et une dérive en fréquence de l'onde de pompe étirée, est avantageusement défini, selon une approximation au premier ordre, par :

$$\alpha_S = -\frac{3\beta_3(w_{s0}-w_{p0})}{\beta_4(w_{s0}-w_{p0})^2+6\beta_2}\alpha_P,$$

avec

$\alpha_s$ la dérive en fréquence de l'onde signal étirée ;
$\alpha_P$ la dérive en fréquence de l'onde de pompe étirée ;
$w_{s0}$ la pulsation centrale de l'onde signal d'entrée ;
$w_{p0}$ la pulsation centrale de l'onde de pompe ;
$\beta_2, \beta_3, \beta_4$, les coefficients des termes d'ordre 0, 1 et 2, dans le développement limité, autour de $w_{p0}$, du coefficient de dispersion du deuxième ordre du guide d'onde.

L'invention concerne également un système comprenant un dispositif d'amplification paramétrique optique d'impulsions à dérive en fréquence selon l'invention, dans lequel les moyens d'émission sont agencés pour émettre en outre des impulsions lumineuses dites onde signal d'entrée. Le système selon l'invention comprend :

- un second étireur, agencé pour recevoir en entrée l'onde signal d'entrée ($S_0$), et pour fournir en sortie l'onde signal étirée, et
- un compresseur, agencé pour compresser temporellement l'onde signal de sortie.

Les moyens d'émission peuvent comprendre une unique source d'impulsions lumineuses, pour émettre un faisceau lumineux impulsionnel initial.

Selon un premier mode de réalisation de l'invention, les moyens d'émission comprennent en outre des moyens de sélection spectrale, agencés pour séparer deux contributions spectrales du faisceau lumineux impulsionnel initial, une première contribution spectrale formant l'onde de pompe, et une deuxième contribution spectrale formant l'onde signal d'entrée.

Selon une première variante de ce premier mode de réalisation, les moyens d'émission comprennent en outre :

- des moyens de séparation, agencés pour séparer deux contributions en amplitude du faisceau lumineux impulsionnel initial, une première contribution en amplitude formant l'onde signal d'entrée ; et
- des moyens de décalage spectral, agencés pour recevoir en entrée une deuxième contribution en amplitude, et pour fournir en sortie l'onde de pompe.

Selon une deuxième variante de ce premier mode de réalisation, les moyens d'émission comprennent :

- une première source d'impulsions lumineuses, pour émettre l'onde de pompe ; et
- une seconde source d'impulsions lumineuses, pour émettre l'onde signal d'entrée ;

les première et seconde sources d'impulsions lumineuses étant reliées entre elles par des moyens de synchronisation des impulsions.

Selon un deuxième mode de réalisation de l'invention, les moyens de mise en forme d'une onde comprennent en outre des moyens de façonnage en amplitude et/ou en phase, d'une enveloppe d'impulsion.

L'invention concerne enfin un procédé d'amplification paramétrique optique d'impulsions à dérive en fréquence, comprenant une étape d'étirement temporel d'impulsions lumineuses, de façon à fournir les impulsions à dérive en fréquence dites onde signal étirée. Le procédé selon l'invention comprend également les étapes suivantes :

- étirement temporel d'impulsions lumineuses dites onde de pompe, pour fournir une onde de pompe étirée ; et
- mélange à quatre ondes de l'onde de pompe étirée et de l'onde signal étirée.

**BRÈVE DESCRIPTION DES DESSINS**

La présente invention sera mieux comprise à la lecture de la description d'exemples de réalisation donnés à titre purement indicatif et nullement limitatif, en faisant référence aux dessins annexés sur lesquels :

- la figure 1 illustre de manière schématique un amplificateur paramétrique optique fibré d'impulsions à dérive de fréquence selon l'art antérieur ;
- les figures 2A et 2B illustrent le principe de fonctionnement d'un amplificateur paramétrique optique fibré d'impulsions à dérive de fréquence selon l'art antérieur ;
- la figure 3 illustre de manière schématique un dispositif d'amplification paramétrique optique fibré d'impulsions à dérive de fréquence selon l'invention ;
- la figure 4 illustre le principe de fonctionnement d'un dispositif d'amplification paramétrique optique fibré d'impulsions à dérive de fréquence selon l'invention ;
- la figure 5 illustre un premier mode de réalisation d'un système d'amplification paramétrique optique fibré d'impulsions à dérive de fréquence selon l'invention ;
- la figure 6 illustre un deuxième mode de réalisation d'un système d'amplification paramétrique optique fibré d'impulsions à dérive de fréquence selon l'invention ;
- la figure 7 illustre un troisième mode de réalisation d'un système d'amplification paramétrique optique fibré d'impulsions à dérive de fréquence selon l'invention ;
- la figure 8 illustre un exemple de gain obtenu à l'aide d'un dispositif d'amplification paramétrique optique fibré d'impulsions à dérive de fréquence selon l'invention ; et
- la figure 9 illustre un exemple de formes d'impulsions initiale et finale, en entrée et en sortie d'un dispositif d'amplification paramétrique optique fibré d'impulsions à dérive de fréquence selon l'invention.

**EXPOSÉ DÉTAILLÉ DE MODES DE RÉALISATION PARTICULIERS**

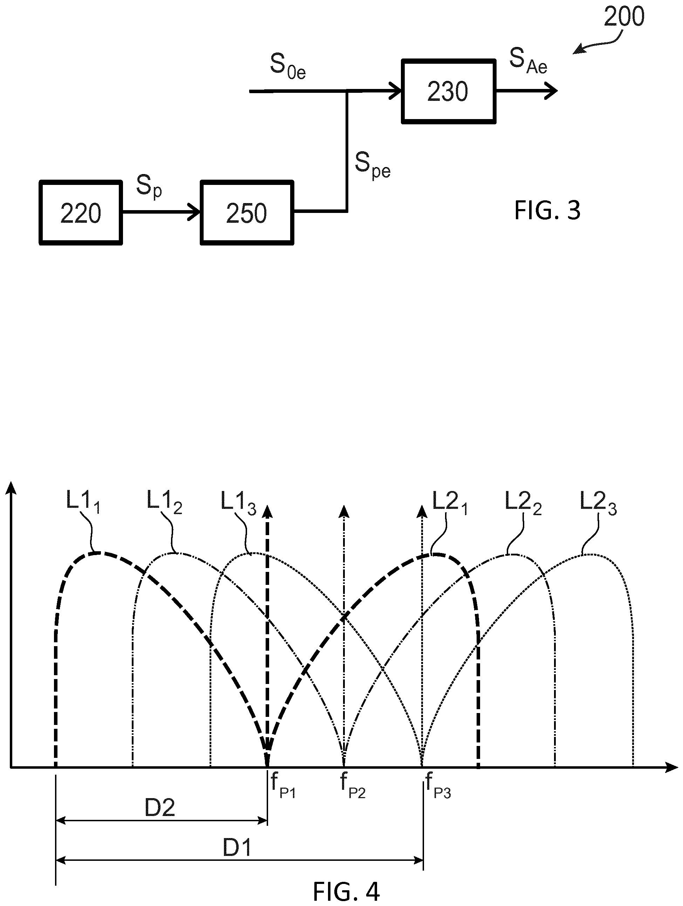

On a illustré en figure 3, et de manière schématique un dispositif 200 d'amplification paramétrique optique fibré d'impulsions à dérive de fréquence selon l'invention.

Le dispositif 200 selon l'invention comprend :

- des moyens d'émission 220, pour émettre des impulsions lumineuses non monochromatiques, dites impulsions de pompe ou onde de pompe $S_p$ ; et
- des moyens de mise en forme d'une onde comportant un premier étireur 250.

Les moyens de mise en forme reçoivent en entrée l'onde de pompe, et fournissent en sortie une onde de pompe étirée $S_{pe}$. L'étireur 250 est du type de celui décrit en introduction. L'onde de pompe $S_p$ n'est pas monochromatique. L'onde de pompe étirée $S_{pe}$ correspond à l'onde de pompe dans laquelle les fréquences sont distribuées continûment sous une enveloppe temporelle.

Le dispositif 200 comprend également un guide d'onde, consistant ici en une fibre optique non linéaire 230. La fibre 230 reçoit en entrée les impulsions de l'onde de pompe étirée $S_{pe}$, et des impulsions à dérive en fréquence telles que décrites en introduction, dites onde signal étirée $S_{0e}$. La fibre optique non linéaire 230 présente une non-linéarité d'ordre 3 (milieu non centro-symétrique). Elle réalise un mélange à quatre ondes impliquant deux photons de l'onde de pompe étirée $S_{pe}$ et un photon de l'onde signal étirée $S_{0e}$. Ce mélange à quatre ondes réalise un transfert d'énergie de l'onde de pompe étirée $S_{pe}$ vers l'onde signal étirée $S_{0e}$ et vers une onde dite complémentaire. La fibre optique non linéaire 230 est par exemple une fibre optique micro-structurée de plus de dix mètres de long.

On obtient ainsi, en sortie de la fibre optique non linéaire 230 une onde signal de sortie $S_{Ae}$ correspondant à l'onde signal d'entrée, étirée amplifiée.

Dans tout le texte, on prendra l'exemple d'un guide d'onde consistant en une fibre optique non linéaire. Cet exemple n'est cependant nullement limitatif, et on pourra imaginer de nombreuses variantes mettant en oeuvre un autre type de guide d'onde apte à réaliser un mélange à quatre ondes impliquant deux photons de l'onde de pompe étirée $S_{pe}$ et un photon de l'onde signal étirée $S_{0e}$. Des guides d'onde à géométrie non cylindrique comprennent par exemple un guide d'onde en ruban ou un guide d'onde diélectrique. Dans tout le texte, le terme « guide d'onde » désigne un guide d'onde optique.

La figure 4 illustre de façon schématique le principe mis en oeuvre dans le dispositif selon l'invention.

Comme détaillé en introduction, dans le cas d'une onde de pompe monochromatique, on peut obtenir deux lobes de gain L1 et L2 de part et d'autre de la fréquence de l'onde de pompe. Chaque lobe présente typiquement une largeur de quelques THz (à -3 dB du gain maximum).

Selon l'invention, et grâce à l'étireur 250 :

-   à un instant t1, l'onde de pompe possède une fréquence $f_{P1}$, et on obtient deux lobes de gain $L1_1$, $L2_1$, de part et d'autre de la fréquence $f_{P1}$ (traits gras pointillés) ;
-   à un instant t2, l'onde de pompe possède une fréquence $f_{P2}$, et on obtient deux lobes de gain $L1_2$, $L2_2$, de part et d'autre de la fréquence $f_{P2}$ (traits fins mixtes) ;
-   à un instant t3, l'onde de pompe possède une fréquence $f_{P3}$, et on obtient deux lobes de gain $L1_3$, $L2_3$, de part et d'autre de la fréquence $f_{P3}$ (traits fins pointillés) ;
-   etc.

On obtient donc une série de lobes de gain continument décalés temporellement et spectralement. De préférence, l'onde à amplifier (située sous les lobes $L1_1$ à $L1_3$ ou $L2_1$ à $L2_3$) est séparée spectralement de l'onde de pompe (ensembles des $f_{Pi}$).

L'étendue totale de la série de lobes gauches (ou droits) présente une largeur spectrale D1, bien supérieure à la largeur spectrale D2 d'un seul des lobes gauches (ou droits). La largeur spectrale D1 correspond à la bande de gain, distribuée temporellement, d'un dispositif selon l'invention.

On peut donc amplifier l'onde signal d'entrée sur un large spectre à condition qu'à chaque instant, dans la fibre optique non linéaire 230, circule une portion de spectre de l'onde de pompe étirée adaptée à une portion de spectre de l'onde signal étirée.

En d'autres termes, on peut amplifier, dans la fibre optique non linéaire 230, l'onde signal d'entrée sur un large spectre à condition qu'à chaque instant, une onde de pompe étirée et l'onde signal étirée possèdent des phases spectrales respectives adaptées l'une à l'autre. Chaque partie du profil temporel de l'onde signal étirée est amplifiée par un gain bien déterminé. Ce gain est ajustable par la dérive en fréquence et la largeur spectrale de l'onde de pompe étiré. La position des lobes dépend de la fréquence centrale de l'onde de pompe, de la puissance de l'onde de pompe et de sa dispersion dans la fibre 230.

Un large spectre correspond à une faible largeur temporelle. L'invention permet donc d'amplifier, avec un gain élevé et sans rétrécissement spectral par le gain, des impulsions présentant une faible largeur temporelle.

En particulier, on peut amplifier avec un gain supérieur ou égal à 30 dB, des impulsions de durée inférieure à 100 fs, sans rétrécissement spectral par le gain.

On peut amplifier des impulsions dites ultra-courtes, de durée comprise entre 10 fs et 100 fs, sans rétrécissement spectral par le gain. Les impulsions amplifiées présentent alors également une durée comprise entre 10 fs et 100 fs (onde signal de sortie après compression temporelle).

Ces performances sont obtenues à l'aide d'un dispositif mettant en oeuvre un mélange à quatre ondes dans un guide d'onde. Le dispositif selon l'invention est donc robuste et peu encombrant.

Le dispositif selon l'invention permet également d'obtenir des impulsions amplifiées présentant un fort contraste (rapport entre l'intensité maximale de l'impulsion, et un maximum d'intensité parmi l'intensité maximale d'un pied de l'impulsion et l'intensité maximale d'un pic secondaire).

La largeur spectrale de l'onde de pompe peut être bien inférieure à la largeur spectrale de l'onde signal d'entrée, puisqu'une seule fréquence de l'onde de pompe permet d'amplifier toute une bande spectrale de l'onde signal d'entrée.

L'onde de pompe présente avantageusement une largeur spectrale de l'ordre du nanomètre, par exemple supérieure à 0,5 nm ou même 1 nm. La largeur spectrale de l'onde de pompe est par exemple comprise entre 0,5 nm et 5 nm.

L'utilisation d'une onde de pompe à spectre large va à l'encontre des préjugés techniques de l'homme du métier. En effet, le processus non linéaire de mélange à quatre ondes est d'autant plus efficace que l'on réalise un bon recouvrement temporel entre les impulsions de l'onde de pompe et les impulsions de l'onde signal étirée. Or, des impulsions de l'onde de pompe à spectre large impliquent une faible largeur temporelle, d'où un mauvais recouvrement temporel avec les impulsions de l'onde signal étirée, en l'absence d'adaptation particulière.

Selon l'invention, l'étireur allonge la durée des impulsions de l'onde de pompe, tout en conservant son support spectral. On peut donc réaliser un bon recouvrement temporel à l'aide d'impulsions de l'onde de pompe courtes, de durée inférieure à la centaine de picosecondes. Les moyens d'émission fournissent par exemple des impulsions de l'onde de pompe de largeur temporelle comprise entre 1 ps et 100 ps, qui seront ensuite élargies temporellement par l'étireur 250.

On va maintenant détailler des conditions d'obtention de l'accord de phase entre l'onde de pompe étirée et l'onde signal étirée.

Soit une onde de pompe de pulsation centrale $\omega_{p0}$ (= $2\pi f_{p0}$), la pulsation instantanée de l'onde de pompe étirée s'écrit, selon une approximation au premier ordre :

$$\omega_p(t) = \alpha_p * t + \omega_{p0} \; , \qquad\qquad (1)$$

où $\alpha_p$ est la dérive en fréquence de l'onde de pompe étirée.

Soit une onde signal d'entrée de pulsation centrale $\omega_{s0}$ (= $2\pi f_{p0}$), la pulsation instantanée de l'onde signal étirée s'écrit, selon une approximation au premier ordre :

$$\omega_s(t) = \alpha_s * t + \omega_{s0} \qquad\qquad (2)$$

où $\alpha_s$ est la dérive en fréquence de l'onde signal étirée.

Le guide d'onde 230 présente un coefficient non linéaire $\gamma$, et le développement limité à l'ordre deux autour de $\omega_{p0}$ de son coefficient de dispersion du deuxième ordre s'écrit :

$$\beta_2(\omega) = \beta_2|_{\omega=\omega_{p0}} + \beta_3|_{\omega=\omega_{p0}}\big(\omega - \omega_{p0}\big) + \frac{1}{2}\beta_4|_{\omega=\omega_{p0}}\big(\omega - \omega_{p0}\big)^2 \qquad (3)$$

On note : $\beta_2 = \beta_2|_{\omega=\omega_{p0}}$, $\beta_3 = \beta_3|_{\omega=\omega_{p0}}$, $\beta_4 = \beta_4|_{\omega=\omega_{p0}}$

A partir des équations de conservation de l'énergie et de la quantité de mouvement, on en déduit le lien entre la pulsation centrale de l'onde signal d'entrée et la pulsation centrale de l'onde de pompe, pour réaliser un transfert d'énergie optimal de l'onde de pompe de puissance $P$ vers l'onde signal d'entrée, à l'aide d'un mécanisme de mélange à quatre ondes impliquant deux photons de l'onde de pompe, un photon de l'onde signal étirée et un photon dit complémentaire :

$$\omega_{s0} = \omega_{p0} \mp \sqrt{\frac{2}{\beta_4}\left(-3\beta_2 \mp \sqrt{9{\beta_2}^2 - 6\beta_4\gamma P}\right)} \qquad\qquad (4)$$

L'équation (4) est connue, et détermine, dans l'art antérieur, une valeur de la pulsation centrale de l'onde signal d'entrée relativement à la pulsation de l'onde de pompe. Selon l'invention, l'onde de pompe est à spectre large, et l'équation (4) relie la pulsation centrale de l'onde signal d'entrée et la pulsation centrale de l'onde de pompe.

Le premier signe $\mp$ correspond au fait qu'il y a deux lobes de gain situés de part et d'autre de la fréquence centrale de l'onde de pompe. On choisit une solution ou l'autre en fonction des longueurs d'onde facilement disponibles dans le commerce. Le deuxième signe $\mp$ correspond aux différents cas possibles selon les signes de $\beta_2$ et $\beta_4$ (par exemple $\beta_2 < 0$ et $\beta_4 > 0$).

A partir des équations précédentes, il a pu être déterminé un lien entre la dérive en fréquence de l'onde signal étirée et la dérive en fréquence de l'onde de pompe étirée, permettant de réaliser un transfert d'énergie optimal (accord de phase dans le guide d'onde), à l'aide d'un dispositif selon l'invention :

$$\alpha_s = -\frac{3\beta_3(\omega_{s0} - \omega_{p0})}{\beta_4(\omega_{s0} - \omega_{p0})^2 + 6\beta_2}\alpha_p \qquad\qquad (5)$$

Cette équation est obtenue notamment à partir des équations (1) et (2). Il s'agit donc également d'une approximation à l'ordre 1, mais qui est suffisante pour obtenir des résultats très satisfaisants.

Ainsi, l'étireur 250, et un étireur (non représenté en figure 3) fournissant l'onde signal étirée, sont ajustés l'un relativement à l'autre, et pour un guide d'onde déterminé, afin de réaliser à chaque instant l'accord de phase nécessaire au transfert d'énergie recherché.

Pour cela l'homme du métier saura aisément ajuster une dérive en fréquence apportée par un étireur, et/ou déterminer les caractéristiques d'un guide d'onde.

L'étireur 250, et un étireur fournissant l'onde signal étirée, sont également ajustés l'un relativement à l'autre de façon à ce que la durée d'une impulsion de l'onde signal étirée soit sensiblement égale à la durée d'une impulsion de l'onde de pompe étirée.

De manière plus générale, on pourra simplement dire que l'étireur 250, et un étireur fournissant l'onde signal étirée, sont ajustés l'un relativement à l'autre de façon à ce que les phases spectrales de l'onde de pompe étirée et de l'onde signal étirée soient accordées l'une avec l'autre (accord de phase pour un mélange à quatre ondes).

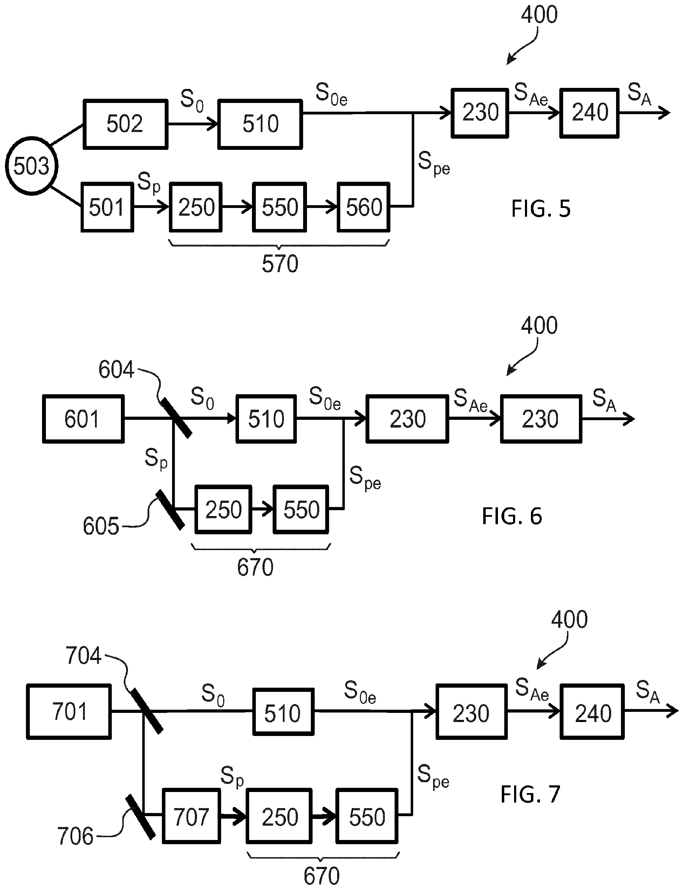

La figure 5 illustre un premier mode de réalisation d'un système d'amplification paramétrique optique fibré d'impulsions à dérive de fréquence selon l'invention.

Le système 400 comprend :

- un dispositif 200 selon l'invention ;
- les moyens pour produire les impulsions à dérive de fréquence qui vont être amplifiées ; et
- un compresseur.

Le système 400 peut être entièrement fibré.

Dans l'exemple représenté en figure 5, les moyens d'émission comprennent :

- un premier laser 501, émettant l'onde de pompe $S_p$, avec un spectre d'environ 2 nm de large ; et
- un second laser 502, émettant l'onde signal d'entrée $S_0$, correspondant à des impulsions d'une durée inférieure à 100 fs, et de spectre d'environ 30 nm de large.

Le premier laser 501 et le second laser 502 sont synchronisés l'un relativement à l'autre par des moyens de synchronisation 503. Ces moyens 503 consistent par exemple en un système d'asservissement d'une cavité laser sur la fréquence de répétition de l'autre cavité laser. Cet asservissement permet d'ajuster la longueur de cavité d'un second laser, à la longueur de cavité d'un premier laser, la longueur de cavité du premier laser pouvant varier très légèrement au cours du temps en fonction des conditions d'utilisation.

Le premier laser 501, le second laser 502, et les moyens de synchronisation 503, forment ensemble des moyens d'émission, permettant de produire à la fois l'onde signal d'entrée $S_0$ et l'onde de pompe $S_p$ selon l'invention.

Le premier laser 501 émet des impulsions de durée de l'ordre de la picoseconde, de longueur d'onde centrale décalée par rapport à la longueur d'onde centrale des impulsions émises par le second laser 502. On rappelle que la longueur d'onde $\lambda$ et la fréquence $f$ sont liées par : $\lambda = \dfrac{c}{f}$, où $c$ est la célérité de la lumière dans le vide.

Le système 400 selon l'invention comprend également un second étireur 510, recevant en entrée l'onde signal d'entrée et fournissant en sortie l'onde signal étirée $S_{0e}$. Les impulsions de l'onde signal étirée présentent une largeur temporelle de l'ordre de la nanoseconde. De même, les impulsions de l'onde de pompe étirée présentent une largeur temporelle de l'ordre de la nanoseconde. L'étirement temporel réalisé par l'étireur 510 est donc supérieur à l'étirement temporel réalisé par l'étireur 250.

Comme précisé en référence à la figure 3, on obtient, en sortie de la fibre optique non linéaire 230, une onde signal de sortie.

L'onde signal de sortie est amenée à un compresseur 240, qui réduit la largeur temporelle de l'onde signal de sortie $S_{Ae}$ pour se rapprocher au mieux de la largeur temporelle de l'onde signal d'entrée $S_0$. On obtient en sortie du compresseur une onde signal amplifiée $S_A$, correspondant à l'onde signal d'entrée, mais d'intensité bien supérieure.

Le compresseur 240 consiste par exemple en un compresseur à réseaux. Afin d'améliorer la compression, on peut ajouter un dispositif de correction de phase. Une compression parfaite annule entièrement la dérive en fréquence précédemment introduite. Le compresseur 240 permet de retrouver, en sortie, une onde présentant une phase spectrale constante ou qui est une fonction purement linéaire de la pulsation. On obtient ainsi, en sortie du compresseur 240, des impulsions qui présentent une forme temporelle proche de la transformée de Fourier de leur amplitude spectrale.

Dans l'exemple représenté en figure 5, le système 400 selon l'invention comprend également au moins un amplificateur 550. L'amplificateur 550 n'est pas nécessaire, et on pourrait simplement prévoir que le premier laser 501 fournisse directement une onde de plus grande intensité que le second laser 502.

On a également représenté en figure 5 des moyens de façonnage en amplitude et/ou en phase 560, pour façonner l'enveloppe des impulsions de l'onde de pompe étirée fournie à la fibre optique 230.

L'étireur 250, l'amplificateur 550 et les moyens de façonnage en amplitude et/ou en phase 560 forment ensemble des moyens 570 de mise en forme d'une onde selon l'invention.

Les moyens de façonnage en amplitude et/ou en phase 560 permettent d'ajuster l'amplitude et/ou la phase des impulsions de l'onde de pompe étirée $S_{pe}$, afin d'optimiser l'efficacité du processus de mélange à quatre ondes, ou afin d'obtenir des lobes de gain de forme optimisée, par exemple de forme aplatie au sommet.

En variante, on pourrait envisager d'ajuster l'amplitude et/ou la phase de l'onde signal étirée. Cet ajustement modifierait l'amplitude (forme de l'enveloppe) et/ou la phase de l'onde signal amplifiée $S_A$, comparée à l'onde signal d'entrée. Il faudrait compenser ces modifications, ce qui n'est pas nécessaire lorsque c'est l'onde de pompe qui est façonnée en amplitude et/ou en phase.

Les moyens de façonnage 560 peuvent être un composant passif, par exemple un réseau de Bragg fibré, une fibre microstructurée, un masque d'amplitude ou de phase placé dans l'étireur 250. Les caractéristiques du composant passif sont préférentiellement fixées après une étape de calibrage au cours de laquelle on détermine les caractéristiques permettant d'obtenir le résultat souhaité en sortie du système 400 selon l'invention.

En variante, les moyens de façonnage 560 peuvent être un composant actif, parexemple un modulateur fibré de phase ou d'amplitude piloté par un générateur de fonctions arbitraires, un modulateur spatial de lumière placé dans l'étireur 250, un filtre acousto-optique dispersif programmable, etc. Dans ce cas, les moyens de façonnage 560 sont avantageusement reliés à des moyens de mesure d'une caractéristique de l'onde en sortie du système 400, et à des moyens pour calculer la valeur d'une contre-réaction à appliquer aux moyens de façonnage 560 pour obtenir l'onde souhaitée.

La figure 6 illustre un deuxième mode de réalisation d'un système 400 selon l'invention. La figure 6 ne sera décrite que pour ses différences relativement à la figure 5.

En figure 6, le système 400 ne présente pas de moyens de façonnage 560, mais on pourrait cependant prévoir des variantes comprenant des moyens de façonnage 560.

L'étireur 250 et l'amplificateur 550 forment ensemble des moyens de mise en forme 670 selon l'invention.

Les moyens d'émission consistent cette fois en un unique oscillateur laser 601. Cet unique oscillateur laser 601 présente un très large spectre (faible durée des impulsions), par exemple plus de 32 nm de largeur.

Des moyens de filtrage spectral 604 permettent de séparer :

- une onde correspondant à la sélection d'une bande spectrale d'environ 2 nm de largeur, correspondant à l'onde de pompe $S_p$ selon l'invention ; et
- une onde correspondant à la bande spectrale restante, correspondant à l'onde signal d'entrée $S_0$ selon l'invention.

L'unique oscillateur laser 601 et les moyens de filtrage spectral 604 forment ensemble des moyens d'émission, permettant de produire à la fois l'onde signal d'entrée et l'onde de pompe selon l'invention.

On obtient ainsi une onde de pompe et une onde signal d'entrée parfaitement synchrones, sans recours à des moyens de synchronisation.

Les moyens de filtrage spectral 604 consistent par exemple en un démultiplexeur fibré ou une lame dichroïque.

La référence numérique 605 désigne simplement un miroir de renvoi, pour diriger l'onde de pompe vers l'étireur 250.

La figure 7 illustre un troisième mode de réalisation d'un système 400 selon l'invention. La figure 7 ne sera décrite que pour ses différences relativement à la figure 6.

Comme en figure 7, les moyens d'émission consistent en un unique oscillateur laser 701, émettant des impulsions lumineuses de largeur temporelle inférieure à 100 fs.

Des moyens de séparation 704 permettent de séparer l'une de l'autre :

- une première contribution en amplitude, correspondant à l'onde signal d'entrée selon l'invention ; et
- une deuxième contribution en amplitude.

Les moyens de séparation consistent par exemple en un coupleur fibré ou une lame séparatrice.

La deuxième contribution en amplitude est amenée jusqu'à des moyens de décalage spectral 707 (ici, via un miroir de renvoi 706). Les moyens de décalage spectral 707 permettent de décaler une longueur d'onde centrale de la deuxième contribution en amplitude, relativement à la longueur d'onde centrale de la première contribution en amplitude. Les moyens de décalage spectral 707 mettent en oeuvre un effet non linéaire tel que l'effet Raman. De tels moyens sont bien connus de l'homme du métier. On obtient ainsi une onde de pompe $S_p$ selon l'invention, en sortie des moyens de décalage spectral 707.

L'unique oscillateur laser 701, les moyens de séparation 704 et les moyens de décalage spectral 707 forment ensemble des moyens d'émission, permettant de produire à la fois l'onde signal d'entrée et l'onde de pompe selon l'invention.

On obtient ainsi une onde de pompe et une onde signal d'entrée parfaitement synchrones, sans recours à des moyens de synchronisation.

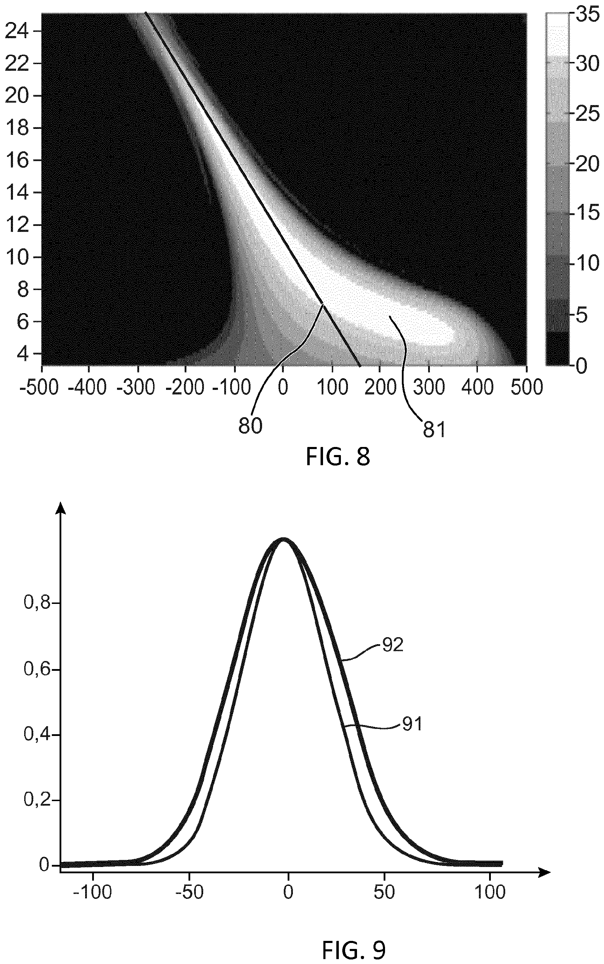

On va maintenant illustrer, en référence aux figures 8 et 9, un exemple de mise en oeuvre de l'invention.

On considère une fibre optique non linéaire présentant les caractéristiques suivantes :

- longueur : 28 m ;
- constante non linéaire $\gamma$ = 2W$^{-1}$.km$^{-1}$ ;
- coefficients du développement limité de la dispersion au deuxième ordre autour de la pulsation centrale de l'onde de pompe (voir équation (3)) : $\beta_2$ = +1.10$^{-28}$ s$^2$/m, $\beta_3$ = +2.10$^{-40}$ s$^3$/m, $\beta_4$ = -1.10$^{-55}$ s$^4$/m

De telles caractéristiques peuvent être obtenues par exemple grâce à la technologie de fabrication de fibres micro-structurées.

Le transfert d'énergie réalisé par effet non linéaire dans la fibre optique, est simulé en résolvant l'équation de Schrödinger Non-Linéaire (incluant les termes de dispersion jusqu'à l'ordre 4, les termes non linéaires, et la réponse Raman). On utilise pour cela des modèles bien connus de l'homme du métier, ces modèles ayant été validés dans le cas des impulsions à dérive en fréquence.

L'onde de pompe présente les caractéristiques suivantes :

- longueur d'onde centrale : 1064 nm ;
- largeur spectrale : 2 nm :
- forme temporelle : super-gaussienne d'ordre 10 (gaussienne aplatie) et de durée 880 ps après dérive en fréquence linéaire ;
- puissance crête : 100 W.

On génère ainsi un gain de 30 dB sur une largeur de plus de 20 THz (soit environ 70 nm autour de 1030 nm). Cette largeur spectrale de gain est alors suffisante pour amplifier une impulsion ultra-courte autour de 1030 nm.

La figure 8 illustre le gain paramétrique obtenu. L'axe des abscisses correspond à un temps, en picosecondes. L'axe des ordonnées correspond à un décalage en fréquence, en THz. Une troisième dimension (niveau de gris) permet d'illustrer la valeur du gain. On a représenté à droite une échelle pour relier un niveau de gris à une valeur du gain, en dB.

Une zone 81 en blanc, autour d'une droite 80, correspondant à un gain supérieur à 30 dB.

La zone 81, en forme de virgule, est entourée par des bandes de plus en plus foncées au fur et à mesure que le gain tend vers zéro.

La droite 80 a pour pente $\alpha_s$ et pour ordonnée à l'origine $\omega_{s0}$ (voir équation (2) : $\omega_s(t) = \alpha_s * t + \omega_{s0}$).

Le fait que la zone 81 présente une forme en virgule, proche d'une forme parfaitement linéaire, illustre le fait que l'on réalise une bonne approximation en considérant que $\omega_s(t) = \alpha_s * t + \omega_{s0}$.

La différence entre une forme en virgule et une forme de droite illustre l'erreur apportée par cette approximation. Cette erreur peut être diminuée en ajustant l'amplitude et/ou la phase de l'onde de pompe étirée pour qu'elle s'adapte à la forme en virgule de la courbe de gain. On utilise pour cela des moyens de façonnage en amplitude et/ou en phase 560 tels que décrits en référence à la figure 5. En variante, on pourrait ajuster l'amplitude et/ou la phase de l'onde signal étirée pour passer la courbe de gain d'une forme en virgule à une forme de droite.

Après amplification paramétrique, l'impulsion est comprimée par un compresseur (dispositif dispersif comprenant un compresseur à réseaux, et un dispositif de correction de phase). On annule ainsi la dérive en fréquence, de sorte que l'impulsion finale obtenue (onde signal amplifiée) présente une forme temporelle proche de la transformée de Fourier de son amplitude spectrale.

La figure 9 illustre une impulsion initiale appartenant à l'onde signal d'entrée S$_0$ (courbe 91), et une impulsion finale appartenant à l'onde signal amplifiée S$_A$ (courbe 92), après compression.

Les deux impulsions sont normalisées en amplitude, de sorte que l'on peut facilement comparer leurs largeurs temporelles respectives.

L'impulsion initiale présente une forme de gaussienne, de largeur spectrale 30 nm, centrée à environ 1030 nm, de largeur temporelle 50 fs, et de puissance crête 1 mW. Sa largeur temporelle après dispersion est égale à 200 ps. Cette impulsion est amplifiée paramétriquement avec le gain représenté en figure 8.

L'impulsion finale obtenue présente une largeur temporelle finale égale à 60 fs. On obtient donc un très léger élargissement temporel et un très faible rétrécissement spectral, et ce malgré un gain de 30 dB.

L'invention trouve de nombreuses applications dans le domaine de la photonique et des lasers ultra-courts, mais aussi dans d'autres domaines dans lesquels on peut souhaiter disposer d'impulsions ultra-courtes et de forte énergie, par exemple :

- pour améliorer une résolution temporelle en stroboscopie ;
- pour réaliser de nouvelles expériences sur l'interaction laser-matière en champ intense, par exemple en physique des plasmas ;
- pour améliorer des dispositifs de microchirurgie, de micro-usinage, de détection de polluants, de télécommunications optiques, de tomographie optique cohérente, etc.


**Revendications**

1. Système (400) comprenant :

   - des moyens d'émission (220), agencés pour émettre des impulsions lumineuses non monochromatiques dites onde de pompe ($S_p$), et pour émettre en outre des impulsions lumineuses dites onde signal d'entrée ($S_0$) ;
   - un étireur, dit second étireur (510), agencé pour recevoir en entrée l'onde signal d'entrée ($S_0$), et pour fournir en sortie des impulsions à dérive en fréquence dites onde signal étirée ($S_{0e}$) ;
   - un guide d'onde (230) agencé pour recevoir en entrée les impulsions à dérive en fréquence dites onde signal étirée ($S_{0e}$), et pour fournir une onde signal de sortie ($S_{Ae}$) résultant d'un mélange à quatre ondes ; et
   - un compresseur (240), agencé pour compresser temporellement l'onde signal de sortie ($S_{Ae}$) ;

   **caractérisé par** :

   - des moyens de mise en forme d'une onde comprenant un premier étireur (250), agencés pour recevoir en entrée l'onde de pompe ($S_p$), et pour fournir en sortie une onde de pompe étiré ($S_{pe}$) ;

   le guide d'onde (230) étant agencé pour recevoir en outre en entrée l'onde de pompe étirée ($S_{pe}$), et le guide d'onde (230), les moyens d'émission (220) et les moyens de mise en forme formant ensemble un dispositif (200) d'amplification paramétrique optique d'impulsions à dérive en fréquence.

2. Système (400) selon la revendication 1, **caractérisé en ce que** les moyens d'émission sont agencés pour émettre une onde de pompe ($S_p$) présentant une largeur spectrale supérieure ou égale au nanomètre.

3. Système (400) selon la revendication 1 ou 2, **caractérisé en ce que** le rapport entre une dérive en fréquence de l'onde signal étirée ($S_{0e}$), et une dérive en fréquence de l'onde de pompe étirée ($S_{pe}$), est défini, selon une approximation au premier ordre, par :

$$\alpha_S = -\frac{3\beta_3(w_{s0}-w_{p0})}{\beta_4(w_{s0}-w_{p0})^2+6\beta_2}\alpha_P,$$

   avec

   $\alpha_s$ la dérive en fréquence de l'onde signal étirée ($S_{0e}$), apportée par le second étireur (510) ;
   $\alpha_P$ la dérive en fréquence de l'onde de pompe étirée ($S_{pe}$), apportée par le premier étireur (250) ;
   $w_{s0}$ la pulsation centrale de l'onde signal d'entrée ($S_0$), émise par les moyens d'émission (220) ;
   $w_{p0}$ la pulsation centrale de l'onde de pompe ($S_p$), émise par les moyens d'émission (220) ;
   $\beta_2$, $\beta_3$, $\beta_4$, les coefficients des termes d'ordre 0, 1 et 2, dans le développement limité, autour de $w_{p0}$, du coefficient de dispersion du deuxième ordre du guide d'onde.

4. Système (400) selon l'une quelconque des revendications 1 à 3, **caractérisé en ce que** les moyens d'émission comprennent une unique source d'impulsions lumineuses (601; 701), pour émettre un faisceau lumineux impulsionnel initial.

5. Système (400) selon la revendication 4, **caractérisé en ce que** les moyens d'émission comprennent en outre des moyens de sélection spectrale (604), agencés pour séparer deux contributions spectrales du faisceau lumineux impulsionnel initial, une première contribution spectrale formant l'onde de pompe ($S_p$), et une deuxième contribution spectrale formant l'onde signal d'entrée ($S_0$).

6. Système (400) selon la revendication 4, **caractérisé en ce que** les moyens d'émission comprennent en outre :

   des moyens de séparation (704), agencés pour séparer deux contributions en amplitude du faisceau lumineux impulsionnel initial, une première contribution en amplitude formant l'onde signal d'entrée (S$_0$) ; et
   - des moyens de décalage spectral (707), agencés pour recevoir en entrée une deuxième contribution en amplitude, et pour fournir en sortie l'onde de pompe (S$_p$).

7. Système (400) l'une quelconque des revendications 1 à 3, **caractérisé en ce que** les moyens d'émission comprennent :

   - une première source d'impulsions lumineuses (501), pour émettre l'onde de pompe (S$_p$) ; et
   - une seconde source d'impulsions lumineuses (502), pour émettre l'onde signal d'entrée (S$_0$) ;

   les première et seconde sources d'impulsions lumineuses étant reliées entre elles par des moyens de synchronisation des impulsions (503).

8. Système (400) selon l'une quelconque des revendications 1 à 7, **caractérisé en ce que** les moyens de mise en forme d'une onde (570) comprennent en outre des moyens (560) de façonnage en amplitude et/ou en phase, d'une enveloppe d'impulsion.

9. Procédé d'amplification paramétrique optique d'impulsions à dérive en fréquence, comprenant une étape d'étirement temporel d'impulsions lumineuses (S$_0$), de façon à fournir les impulsions à dérive en fréquence dites onde signal étirée (S$_{0e}$), **caractérisé en ce qu'**il comprend les étapes suivantes :

   - étirement temporel d'impulsions lumineuses non monochromatiques dites onde de pompe (S$_p$), pour fournir une onde de pompe étirée (S$_{pe}$) ; et
   - mélange à quatre ondes de l'onde de pompe étirée (S$_{pe}$) et de l'onde signal étirée (S$_{se}$) dans un guide d'onde.

10. Procédé selon la revendication 9, **caractérisé en ce que** le rapport entre une dérive en fréquence de l'onde signal étirée (S$_{0e}$), et une dérive en fréquence de l'onde de pompe étirée (S$_{pe}$), est défini, selon une approximation au premier ordre, par :

$$\alpha_S = -\frac{3\beta_3(w_{s0}-w_{p0})}{\beta_4(w_{s0}-w_{p0})^2+6\beta_2}\alpha_P,$$

avec

$\alpha_s$ la dérive en fréquence de l'onde signal étirée (S$_{0e}$) ;
$\alpha_P$ la dérive en fréquence de l'onde de pompe étirée (S$_{pe}$) ;
$w_{s0}$ la pulsation centrale de l'onde signal d'entrée (S$_0$) ;
$w_{p0}$ la pulsation centrale de l'onde de pompe (S$_p$) ;
$\beta_2, \beta_3, \beta_4$, les coefficients des termes d'ordre 0, 1 et 2, dans le développement limité, autour de $w_{p0}$, du coefficient de dispersion du deuxième ordre du guide d'onde.

**Patentansprüche**

1. System (400), enthaltend:

   - Aussendungsmittel (220), die dazu angeordnet sind, nicht monochromatische Lichtimpulse, Pumpwelle (S$_p$) genannt, auszusenden und ferner Lichtimpulse, Eingangssignalwelle (S$_0$) genannt, auszusenden ;
   - einen Strecker, zweiter Strecker (510) genannt, der dazu angeordnet ist, am Eingang die Eingangssignalwelle (S$_0$) zu empfangen und am Ausgang Frequenzdriftimpulse, gestreckte Signalwellen (S$_{0e}$) genannt, bereitzustellen;
   - einen Wellenleiter (230), der dazu angeordnet ist, am Eingang die Frequenzdriftimpulse, gestreckte Signalwelle (S$_{0e}$) genannt, zu empfangen und eine Ausgangssignalwelle (S$_{Ae}$), die sich aus einer Vier-Wellen-Mischung ergibt, bereitzustellen; und
- einen Komprimierer (240), der dazu angeordnet ist, die Ausgangssignalwelle ($S_{Ae}$) zeitlich zu komprimieren;

**gekennzeichnet durch**

- Formenmittel zum Formen einer Welle, die einen ersten Strecker (250) enthalten und dazu angeordnet sind, am Eingang die Pumpwelle ($S_p$) zu empfangen und am Ausgang eine gestreckte Pumpwelle ($S_{pe}$) bereitzustellen;

wobei der Wellenleiter (230) dazu angeordnet ist, am Eingang weiterhin die gestreckte Pumpwelle ($S_{pe}$) zu empfangen, und wobei der Wellenleiter (230), die Aussendungsmittel (220) und die Formenmittel zusammen eine Vorrichtung (200) zur optischen, parametrischen Verstärkung von Frequenzdriftimpulsen bilden.

2. System (400) nach Anspruch 1, **dadurch gekennzeichnet, dass** die Aussendungsmittel dazu angeordnet sind, eine Pumpwelle ($S_p$) auszusenden, die eine Spektralbreite größer oder gleich dem Nanometer aufweist.

3. System (400) nach Anspruch 1 oder 2, **dadurch gekennzeichnet, dass** das Verhältnis zwischen einer Frequenzdrift der gestreckten Signalwelle ($S_{0e}$) und einer Frequenzdrift der gestreckten Pumpwelle ($S_{pe}$) gemäß einer Näherung erster Ordnung definiert ist mit

$$\alpha_S = -\frac{3\beta_3(w_{s0}-w_{p0})}{\beta_4(w_{s0}-w_{p0})^2+6\beta_2}\alpha_P,$$

worin

$\alpha_S$ die Frequenzdrift der gestreckten Signalwelle ($S_{0e}$) ist, die mit dem zweiten Strecker (510) erfolgt;
$\alpha_P$ die Frequenzdrift der gestreckten Pumpwelle ($S_{pe}$) ist, die mit dem ersten Strecker (250) erfolgt;
$w_{s0}$ die mittlere Pulsation der Eingangssignalwelle ($S_0$) ist, die von den Aussendungsmittel (220) emittiert wird;
$w_{p0}$ die mittlere Pulsation der Pumpwelle ($S_p$) ist, die von den Aussendungsmittel (220) emittiert wird;
$\beta_2$, $\beta_3$, $\beta_4$ Koeffizienten der Terme der Ordnung 0, 1 und 2 in begrenzter Abwicklung um $w_{p0}$ des Dispersionskoeffizienten zweiter Ordnung des Wellenleiters sind.

4. System (400) nach einem der Ansprüche 1 bis 3, **dadurch gekennzeichnet, dass** die Aussendungsmittel eine einzige Lichtimpulsquelle (601; 701) aufweisen, um ein anfängliches Impulslichtbündel auszusenden.

5. System (400) nach Anspruch 4, **dadurch gekennzeichnet, dass** die Aussendungsmittel ferner Mittel zur spektralen Selektion (604) aufweisen, die dazu angeordnet sind, zwei spektrale Beitrage des anfänglichen Impulslichtbündels zu trennen, wobei ein erster spektraler Beitrag die Pumpwelle ($S_p$) bildet und ein zweiter spektraler Beitrag die Eingangssignalwelle ($S_0$) bildet.

6. System (400) nach Anspruch 4, **dadurch gekennzeichnet, dass** die Aussendungsmittel ferner enthalten:

- Trennmittel (704), die dazu angeordnet sind, zwei Amplitudenbeiträge des anfänglichen Impulslichtbündels zu trennen, wobei ein erster Amplitudenbeitrag die Eingangssignalwelle ($S_0$) bildet; und
- Mittel zur Spektralverschiebung (707), die dazu angeordnet sind, am Eingang einen zweiten Amplitudenbeitrag zu empfangen und am Ausgang eine Pumpwelle ($S_p$) bereitzustellen.

7. System (400) nach einem der Ansprüche 1 bis 3, **dadurch gekennzeichnet, dass** die Aussendungsmittel enthalten:

- eine erste Lichtimpulsquelle (501) zur Aussendung der Pumpwelle ($S_p$); und
- eine zweite Lichtimpulsquelle (502) zur Aussendung der Eingangssignalwelle ($S_0$); wobei die erste und die zweite Lichtimpulsquelle durch Impulssynchronisationsmittel (503) miteinander verbunden sind.

8. System (400) nach einem der Ansprüche 1 bis 7, **dadurch gekennzeichnet, dass** Formenmittel zum Formen einer Welle (570) ferner Mittel (560) zur Amplituden- und/oder Phasenformgebung einer Impulshülle enthalten.

**9.** Verfahren zur optischen, parametrischen Verstärkung von Frequenzdriftimpulsen, enthaltend einen Schritt des zeitlichen Streckens von Lichtimpulsen ($S_0$), so dass Frequenzdriftimpulse, sogenannte gestreckte Signalwellen ($S_{0e}$), bereitgestellt werden, **dadurch gekennzeichnet, dass** es die nachfolgenden Schritte umfasst:

- zeitliches Strecken von nicht monochromatischen Lichtimpulsen, Pumpwellen ($S_p$) genannt, um eine gestreckte Pumpwelle ($S_{pe}$) bereitzustellen; und
- Vier-Wellen-Mischen der gestreckten Pumpwelle ($S_{pe}$) und der gestreckten Signalwelle ($S_{se}$) in einem Wellenleiter.

**10.** Verfahren nach Anspruch 9, **dadurch gekennzeichnet, dass** das Verhältnis zwischen einer Frequenzdrift der gestreckten Signalwelle ($S_{0e}$) und einer Frequenzdrift der gestreckten Pumpwelle ($S_{pe}$) gemäß einer Näherung erster Ordnung definiert ist mit:

$$\alpha_S = -\frac{3\beta_3(w_{s0}-w_{p0})}{\beta_4(w_{s0}-w_{p0})^2+6\beta_2}\alpha_P,$$

worin

$\alpha_s$ die Frequenzdrift der gestreckten Signalwelle ($S_{0e}$) ist;
$\alpha_P$ die Frequenzdrift der gestreckten Pumpwelle ($S_{pe}$) ist;
$w_{s0}$ die mittlere Pulsation der Eingangssignalwelle ($S_0$) ist;
$w_{p0}$ die mittlere Pulsation der Pumpwelle ($S_p$) ist;
$\beta_2$, $\beta_3$, $\beta_4$ Koeffizienten der Terme der Ordnung 0, 1 und 2 in begrenzter Abwicklung um $w_{p0}$ des Dispersionskoeffizienten zweiter Ordnung des Wellenleiters sind.

**Claims**

**1.** A system (400) comprising:

- an emitting means (220), arranged to emit non-monochromatic light pulses called a pump wave ($S_p$), and to further emit light pulses called an input signal wave ($S_0$);
- a stretcher, called a second stretcher (510), arranged to receive as an input the input signal wave ($S_0$), and to output chirped pulses called a stretched signal wave ($S_{0e}$);
- a waveguide (230) arranged to receive as an input the chirped pulses called a stretched signal wave ($S_{0e}$), and to provide an output signal wave ($S_{Ae}$) resulting from a four wave mixing; and
- a compressor (240), arranged to temporally compress the output signal wave ($S_{Ae}$);

**characterised by**:

- a means for shaping a wave comprising a first stretcher (250), arranged to receive as an input the pump wave ($S_p$), and to output a stretched pump wave ($S_{pe}$);

the waveguide (230) being arranged to further receive as an input the stretched pump wave ($S_{pe}$), and the waveguide (230), the emitting means (220), and the shaping means forming together an optical parametric chirped pulse amplification device (200).

**2.** The system (400) according to claim 1, wherein the emitting means are arranged to emit a pump wave ($S_p$) having a spectral width higher than or equal to one nanometre.

**3.** The system (400) according to claim 1 or 2, wherein the ratio of a chirp of the stretched signal wave ($S_{0e}$) to a chirp of the stretched pump wave ($S_{pe}$) is defined, according to a first order approximation, by:

$$\alpha_S = -\frac{3\beta_3(w_{s0}-w_{p0})}{\beta_4(w_{s0}-w_{p0})^2+6\beta_2}\alpha_P,$$

with

$\alpha_s$ the chirp of the stretched signal wave ($S_{0e}$), fed by the second stretcher (510);
$\alpha_P$ the chirp of the stretched pump wave ($S_{pe}$), fed by the first stretcher (250);
$w_{s0}$ the central pulsation of the input signal wave ($S_0$), emitted by the emitting means (220);
$w_{p0}$ the central pulsation of the pump wave ($S_p$), emitted by the emitting means (220);
$\beta_2$, $\beta_3$, $\beta_4$, the coefficients of the 0, 1 and 2 order terms, in the Taylor expansion of the second order scattering coefficient of the waveguide, around the value $w_{p0}$.

4. The system (400) according to any of claims 1 to 3, wherein the emitting means comprise a single source of light pulses (601; 701), to emit an initial pulsed light beam.

5. The system (400) according to claim 4, wherein the emitting means further comprise spectral selection means (604), arranged to separate two spectral contributions of the initial pulsed light beam, a first spectral contribution forming the pump wave ($S_p$), and a second spectral contribution forming the input signal wave ($S_0$).

6. The system (400) according to claim 4, wherein the emitting means further comprise:

   - a separating means (704), arranged to separate two amplitude contributions of the initial pulsed light beam, a first amplitude contribution forming the input signal wave ($S_0$); and
   - a spectral shifting means (707), arranged to receive as an input a second amplitude contribution, and to output the pump wave ($S_p$).

7. The system (400) according to any of claims 1 to 3, wherein the emitting means comprise:

   - a first source of light pulses (501), to emit the pump wave ($S_p$); and
   - a second source of light pulses (502), to emit the input signal wave ($S_0$);

   the first and second sources of light pulses being connected to each other by pulse synchronisation means (503).

8. The system (400) according to any of claims 1 to 7, wherein the means for shaping a wave (570) further comprise means (560) for shaping an amplitude and/or a phase of a pulse envelope.

9. An optical parametric chirped pulse amplification method, comprising a step of temporally stretching light pulses ($S_0$), so as to provide the chirped pulses called a stretched signal wave ($S_{0e}$), **characterised in that** it comprises the following steps of:

   - temporally stretching non-monochromatic light pulses called a pump wave ($S_p$), to provide a stretched pump wave ($S_{pe}$); and
   - four wave mixing the stretched pump wave ($S_{pe}$) and the stretched signal wave ($S_{0e}$) in a waveguide.

10. The method according to claim 9, wherein the ratio of a chirp of the stretched signal wave ($S_{0e}$) to a chirp of the stretched pump wave ($S_{pe}$) is defined, according to a first order approximation, by:

$$\alpha_S = -\frac{3\beta_3(w_{s0}-w_{p0})}{\beta_4(w_{s0}-w_{p0})^2+6\beta_2}\alpha_P,$$

with

$\alpha_s$ the chirp of the stretched signal wave ($S_{0e}$);
$\alpha_P$ the chirp of the stretched pump wave ($S_{pe}$);

$w_{s0}$ the central pulsation of the input signal wave ($S_0$);
$w_{p0}$ the central pulsation of the pump wave ($S_p$);
$\beta_2$, $\beta_3$, $\beta_4$, the coefficients of the 0, 1 and 2 order terms, in the Taylor expansion of the second order scattering coefficient of the waveguide, around the value $w_{p0}$.

FIG. 1
ART ANTERIEUR

FIG. 2A
ART ANTERIEUR

FIG. 2B
ART ANTERIEUR

$S_{0e}$

230

$S_{Ae}$

200

220

$S_p$

250

$S_{pe}$

FIG. 3

$L1_1$ $L1_2$ $L1_3$ $L2_1$ $L2_2$ $L2_3$

$f_{P1}$ $f_{P2}$ $f_{P3}$

D2

D1

FIG. 4

400

$S_0$ 502 → 510 $S_{0e}$ → 230 $S_{Ae}$ → 240 $S_A$ →

503

$S_p$ 501 → 250 → 550 → 560 → $S_{pe}$

570

**FIG. 5**

400

604

601 → $S_0$ 510 $S_{0e}$ → 230 $S_{Ae}$ → 230 $S_A$ →

$S_p$

605

250 → 550 → $S_{pe}$

670

**FIG. 6**

400

704

701 → $S_0$ 510 $S_{0e}$ → 230 $S_{Ae}$ → 240 $S_A$ →

706

$S_p$ 707 → 250 → 550 → $S_{pe}$

670

**FIG. 7**

FIG. 8

FIG. 9